(19) Europäisches Patentamt
European Patent Office
Office européen des brevets

(11) **EP 4 239 537 A1**

(12) **EUROPEAN PATENT APPLICATION**

(43) Date of publication:
**06.09.2023  Bulletin 2023/36**

(21) Application number: **23154148.3**

(22) Date of filing: **31.01.2023**

(51) International Patent Classification (IPC):
***G06N 20/00*** (2019.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **03.03.2022  CN 202210209067**

(71) Applicant: **FUJITSU LIMITED**
**Kawasaki-shi, Kanagawa 211-8588 (JP)**

(72) Inventor: **Liu, Rujie**
**Beijing, 100027 (CN)**

(74) Representative: **Hoffmann Eitle**
**Patent- und Rechtsanwälte PartmbB**
**Arabellastraße 30**
**81925 München (DE)**

(54) **METHOD AND DEVICE OF TRAINING A MODEL AND INFORMATION PROCESSING METHOD**

(57)    The present disclosure relates to a method of training a model, a device of training a model, and an information processing method. According to an embodiment of the present disclosure, the method of training a model comprises: determining a subsample set sequence composed of N subsample sets of a total training sample set; and iteratively training the model in sequence in N stages based on the subsample set sequence; wherein a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set; and each single class sample quantity of the downsampled pre-subsample set is close to or falls into a single class sample quantity distribution interval of the y-th subsample set.

**200**

Figure 2

Processed by Luminess, 75001 PARIS (FR)

**Description**

**CROSS-REFERENCE TO RELATED APPLICATIONS**

This application claims the priority benefit of Chinese Patent Application No. 202210209067.0, filed on March 3, 2022 in the China National Intellectual Property Administration, the disclosure of which is incorporated herein in its entirety by reference.

**FIELD OF THE INVENTION**

The present disclosure relates generally to information processing, and more particularly, to a method of training a model, a device of training a model, and an information processing method.

**BACKGROUND OF THE INVENTION**

With the development of computer science and artificial intelligence, it is becoming more and more universal and effective to use computers to run artificial intelligence models to implement information processing.

Models with a classification function can implement, for example, object positioning, object recognition, object segmentation, object detection, etc. Input information of the models may be sound information, image information, etc.

Before using a model to process information to be processed, it is necessary to use training samples to train the model. A training method can influence the performance of a model.

**SUMMARY OF THE INVENTION**

A brief summary of the present disclosure is given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

According to an aspect of the present disclosure, there is provided a computer-implemented method of training a model with a classification function, the model configured to have a plurality of candidate classes. The method comprises: determining a subsample set sequence composed of N subsample sets of a total training sample set; and iteratively training the model in sequence in N stages based on the subsample set sequence; wherein there is no intersection between coverage candidate class sets of any two of the N subsample sets; a sequence of average single class sample quantities of the subsample set sequence is a descending sequence; a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set; a coverage candidate class set of the downsampled pre-subsample set is the same as that of the pre-subsample set; and each single class sample quantity of the downsampled pre-subsample set is close to or falls into a single class sample quantity distribution interval of the y-th subsample set.

According to an aspect of the present disclosure, there is provided an image detection method. The method comprises: processing an object to be processed using the model trained by the above-mentioned method of training a model.

According to an aspect of the present disclosure, there is provided a device for training a model. The device comprises: a subsample set sequence determining unit and a training unit. The subsample set sequence determining unit is configured to determine a subsample set sequence composed of N subsample sets of a total training sample set. The training unit is configured to: iteratively train the model in sequence in N stages based on the subsample set sequence. Wherein, there is no intersection between coverage candidate class sets of any two of the N subsample sets, a sequence of average single class sample quantities of the subsample set sequence is a descending sequence, a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set, a coverage candidate class set of the downsampled pre-subsample set is the same as that of the pre-subsample set, and, each single class sample quantity of the downsampled pre-subsample set is close to or falls into a single class sample quantity distribution interval of the y-th subsample set.

According to an aspect of the present disclosure, there is provided a device for training a model. The model is configured to have a plurality of candidate classes. The device comprises: a memory having instructions stored thereon; and at least one processor connected with the memory and configured to execute the instructions to: determine a subsample set sequence composed of N subsample sets of a total training sample set; and iteratively train the model in sequence in N stages based on the subsample set sequence; wherein there is no intersection between coverage candidate class sets of any two of the N subsample sets; a sequence of average single class sample quantities of the subsample set sequence is a descending sequence; a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set; a coverage candidate class set of the downsampled pre-subsample set is the same as that of the pre-subsample set; and each single class sample quantity of the downsampled pre-subsample set is close to or falls into a single class sample quantity distribution interval of the y-th subsample set.

According to an aspect of the present disclosure, there is provided a non-transitory computer-readable storage medium storing thereon a program that, when executed, causes a computer to: determine a subsample set sequence composed of N subsample sets of a total training sample set; and iteratively train the model in sequence in N stages based on the subsample set sequence; wherein there is no intersection between coverage candidate class sets of any two of the N subsample sets; a sequence of average single class sample quantities of the subsample set sequence is a descending sequence; a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set; a coverage candidate class set of the downsampled pre-subsample set is the same as that of the pre-subsample set; and each single class sample quantity of the downsampled pre-subsample set is close to or falls into a single class sample quantity distribution interval of the y-th subsample set.

According to an aspect of the present disclosure, there is provided a non-transitory computer-readable storage medium storing thereon a program that, when executed, causes a computer to: process an object to be processed using a trained model; wherein the trained model is the model trained using the method of training a model of the present disclosure.

The beneficial effects of the methods, devices, and storage media of the present disclosure include at least: improving the accuracy performance of a model.

## BRIEF DESCRIPTION OF THE DRAWINGS

Embodiments of the present disclosure will be described below with reference to the accompanying drawings, which will help to more easily understand the above and other objects, features and advantages of the present disclosure. The accompanying drawings are merely intended to illustrate the principles of the present disclosure. The sizes and relative positions of units are not necessarily drawn to scale in the accompanying drawings. The same reference numbers may denote the same features. In the accompanying drawings:

Figure 1 illustrates a schematic view of a long-tail distribution of sample quantities with respect to categories;

Figure 2 illustrates an exemplary flowchart of a method of training a model according to an embodiment of the present disclosure;

Figure 3 illustrates an exemplary flow of a method of training a model according to an embodiment of the present disclosure;

Figure 4 illustrates a flowchart of a method for downsampling according to an embodiment of the present disclosure;

Figure 5 illustrates a schematic view of a method for downsampling according to an embodiment of the present disclosure;

Figure 6 illustrates an exemplary flowchart of an information processing method according to an embodiment of the present disclosure;

Figure 7 is an exemplary block diagram of a device for training a model according to an embodiment of the present disclosure;

Figure 8 is an exemplary block diagram of a device for training a model according to an embodiment of the present disclosure; and

Figure 9 is an exemplary block diagram of an information processing device according to an embodiment of the present disclosure.

**DETAILED DESCRIPTION OF THE INVENTION**

Hereinafter, exemplary embodiments of the present disclosure will be described combined with the accompanying drawings. For the sake of clarity and conciseness, the specification does not describe all features of actual embodiments. However, it should be understood that many decisions specific to the embodiments may be made in developing any such actual embodiment, so as to achieve specific objects of a developer, and these decisions may vary as embodiments are different.

It should also be noted herein that, to avoid the present disclosure from being obscured due to unnecessary details, only those device structures closely related to the solution according to the present disclosure are shown in the accompanying drawings, while other details not closely related to the present disclosure are omitted.

It should be understood that, the present disclosure will not be limited only to the described embodiments due to the following description with reference to the accompanying drawings. Herein, where feasible, embodiments may be combined with each other, features may be substituted or borrowed between different embodiments, and one or more features may be omitted in one embodiment.

Computer program code for performing operations of various aspects of embodiments of the present disclosure can be written in any combination of one or more programming languages, the programming languages including object-oriented programming languages, such as Java, Smalltalk, C++ and the like, and further including conventional procedural programming languages, such as "C" programming language or similar programming languages.

Methods of the present disclosure can be implemented by circuitry having corresponding functional configurations. The circuitry includes circuitry for a processor.

An aspect of the present disclosure relates to a method of training a model M with a classification function. The method can be implemented by a computer. The model M may be a deep learning model based on a neural network. The method can be used for suppressing the problem of an uneven distribution of single class sample quantities (i.e., the number of samples belonging to one candidate class in a sample set) in training a model, and is particularly suitable for suppressing adverse influences of the long-tail phenomenon of a single class sample distribution on model performances.

The long-tail phenomenon will be described below. In training a model with a classification function, training data (i.e., a training sample set) contains samples of all categories. However, a distribution of these samples in the training data is often very uneven. The number of samples of some categories (head categories) is relatively more, while the number of samples of some categories (tail categories) is relatively less, and also, the category number of the tail categories with less sample quantities is often more than that of the head categories.

For example: if an image recognition model is to be trained such that it can recognize given 100 kinds of animals from images, the training data preferably contains images of all these 100 kinds of animals. For 20 kinds of common animals, such as cats and dogs, it is easy to acquire images, and therefore there are often relatively more samples of these 20 kinds of common animals; and for the remaining 80 kinds of rare and even endangered animals, it is very difficult to acquire images, and therefore there are relatively less sample quantities of the other 80 kinds of animals.

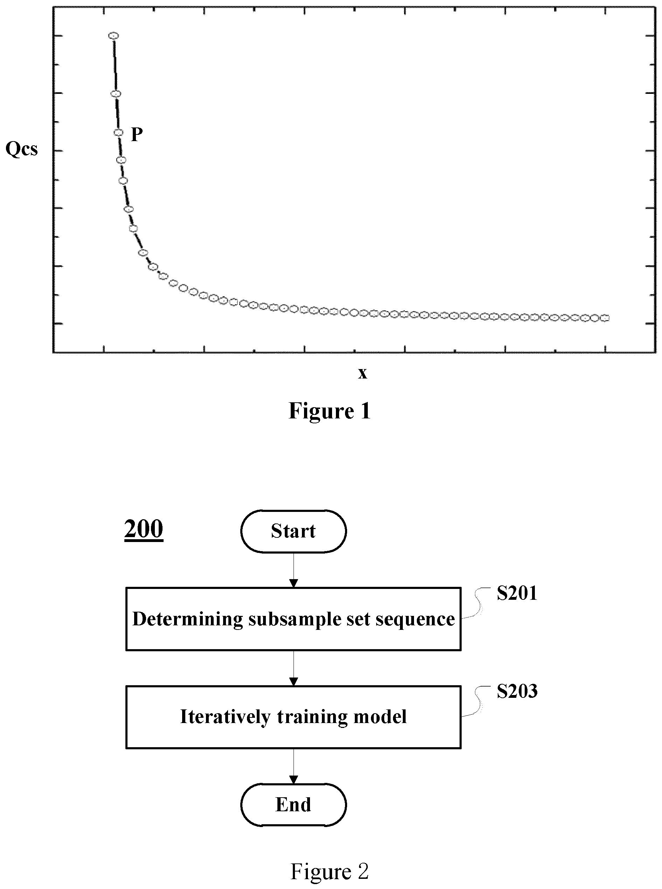

That is to say, for a training sample set used for training a model with a classification function, a distribution graph of single class sample quantities with respect to categories which is obtained by taking the number (i.e., "sample class sample quantity") of samples of each category as the ordinate and marking a class sequence in descending order of single class sample quantities as the abscissa shows a longer tail, that is, with respect to relatively less header categories with relatively more sample quantities, there are a large number of tail categories with relatively less sample quantities, and accordingly, the distribution graph shows a long tail. Figure 1 illustrates a schematic view of a long-tail distribution of sample quantities with respect to categories, wherein the abscissa x of any data point P represents a serial number of a category, which is equivalent to category C[x], the ordinate Qcs of any data point P represents a single class sample quantity of the corresponding category C[x], and single class sample quantities are counted based on a sample set. On the abscissa, from left to right, the serial numbers of the categories are arranged according to a monotonous decrease in the single class sample quantities of their corresponding categories. As can be clearly seen from Figure 1, the distribution graph has a relatively longer tail where, with respect to the head, a large number of categories with small sample quantities are converged. A training sample set with an uneven single class sample quantity distribution such as a long-tail distribution is common, and has a relatively lower acquisition cost, but in training a model according to a conventional method using such a training sample set, due to an uneven distribution of single class sample quantities with respect to categories, it is possible to cause the model performance obtained after the training to be relatively lower. With respect to an object to be processed of a corresponding category with large sample quantities, the classification accuracy for an object to be processed of a category with a small sample quantity is poor. Based on this, the inventor conceived and proposed a method of training a model of the disclosure through study.

Exemplary description of a method of training a model of the present disclosure will be made with reference to Figure 2 below. Figure 2 illustrates an exemplary flowchart of a method 200 of training a model M according to an embodiment of the present disclosure. The model M is a model with a classification function, wherein the model M includes a plurality of candidate classes, any candidate class may be marked as C[x], and the plurality of candidate classes forms a candidate class set, which is marked as {C[x]} ("{}" represents a set, C[x] represents an x-th element in the set, the set includes a plurality of elements, and for the sake of simplicity, only a general element C[x] is illustrated). {C[x]} may be represented as: {C[xStart], ...... , C[xEnd]}; that is, x takes a value between sStart and xEnd. When the model M processes an object to be processed, a category of the object to be processed that is given by the model M is selected from a category in the candidate class set {C[x]}. The object to be processed is, for example, image information or sound information. Samples in a total training sample set St for training the model M have been labeled with known category labels that identify categories of the samples. When the samples are used for training the model M, model parameters can be adjusted based on estimated categories of the samples that are given by the model M and identified categories of the samples to optimize the model, so as to improve the performance of the model.

In operation S201, a subsample set sequence Ss composed of N subsample sets of a total training sample set St: SamsSF[1], ......, SamsSF[n],...... SamsSF[N] is determined. In the N subsample sets, there is no intersection between coverage candidate class sets of any two. A sequence of average single class sample quantities of the subsample set sequence Ss is a descending sequence. When the subsample set contains samples of the candidate class C[x], it is regarded that the subsample set covers the candidate class C[x]. A set of all candidate classes covered by the subsample set SamsSF[n] is marked as "coverage candidate class set Cs[n]". That is, the subsample set sequence Ss satisfies Equation 1.

$$\mathrm{Cs}[n1] \cap \mathrm{Cs}[n2] = \emptyset \quad \forall\, n1, n2 \in [1, N], \text{and } n1 \neq n2 \qquad (1)$$

The sequence Saq of the average single class sample quantities of the subsample set sequence Ss is avgQcs[1], ......, avgQcs[n], ......avgQcs[N]. The sequence Saq is a descending sequence in which the average single class sample quantities (avgQcs) are gradually decreased. The number (i.e., coverage class quantity) of elements in the coverage candidate class set Cs[n] of the subsample set SamsSF[n] is represented by Qc[n], the sample quantity in the subsample set SamsSF[n] is represented by Qs[n], and accordingly the average single class sample quantity of the subsample set SamsSF[n] is avgQcs[n]=Qs[n]/Qc[n].

Since it is possible to downsample the subsample set SamsSF[n] later, the subsample set SamsSF[n] is also referred to as a "complete subsample set", and a sample set obtained after downsampling it may be referred to as a "downsampled subsample set".

It should be noted that, although the N subsample sets SamsSF[1] to SamsSF[N] in the subsample set sequence Ss are composed of the N subsample sets of the total training sample set, that is, St=SamsSF[1] U ... U SamsSF[N], in consideration of other limitations to the subsample set sequence Ss, when the total training sample set St is arbitrarily grouped into N subsample sets, the N subsample sets are not necessarily able to serve as one of the subsample sets SamsSF[1] to SamsSF[N].

In operation S203, the model is iteratively trained in sequence in N stages based on the subsample set sequence Ss. A stage training sample set SamsPh[y] of a y-th stage from a second stage to a N-th stage in the N stages comprises a y-th subsample set SamsSF[y] in the subsample set sequence Ss and a downsampled pre-subsample set DwnSamsPre[y] of a pre-subsample set SamsPre[y] composed of all subsample sets before the y-th subsample set. y is any natural number in the range of [2,N]. In the method 200, it is possible to set y to a plurality of values, that is, it is possible that there are a plurality of such stages in which during training, in addition to using a corresponding subsample set of this stage, a corresponding downsampled pre-subsample set is also used. In the method 200, a downsampled sample set DwnSobj of a target sample set Sobj is determined on the target sample set Sobj by adopting a downsampling operation Op_DwnSam with reference to a reference sample set Sref. The target sample set Sobj can be a sample set such as SamsPre[y] or SamsFS[n]. The downsampling operation Op_DwnSam is configured such that: when a downsampled sample set DwnSobj is obtained by performing the downsampling operation on a target sample set Sobj with reference to a reference sample set Sref, a coverage candidate class set of the downsampled sample set DwnSobj is the same as that of the target sample set Sobj, and meanwhile, each single class sample quantity of the downsampled target sample set is close to or falls into a single class sample quantity distribution interval of the reference sample set. That is, downsampling decreases the single class sample quantities of the target sample set, but does not change the coverage candidate class set of the target sample set. In the y-th stage, the downsampled pre-subsample set DwnSamsPre[y] is determined by performing a downsampling operation SamsPre[y] on the pre-subsample set SamsPre[y] with reference to the y-th subsample set SamsSF[y] serving as the reference sample set. A coverage candidate class set of the downsampled pre-subsample set DwnSamsPre[y] is the same as that of the pre-subsample set SamsPre[y]. Meanwhile, each single class sample quantity (QcsD[y][i], where i is a value from iStart to iEnd, and iStart and iEnd are related to y) of the downsampled pre-subsample set DwnSamsPre[y] is close to or falls into a single class sample quantity distribution interval [Qcs0[y].[jStart], Qcs0[y]. [jEnd] of the y-th subsample set SamsSF[y]. A coverage class quantity QcD[y] of DwnSamsPre[y] is a difference between iStart and iEnd. A coverage class quantity of SamsSF[y] is a difference between j Start and jEnd.

In an example, determining the subsample set sequence composed of N subsample sets of the total training sample set St comprises: grouping the total training sample set St into the N subsample sets based on single class sample quantities of respective candidate classes in the total training sample set St; and determining, as the subsample set sequence Ss, a sequence in descending order of average single class sample quantities of the N subsample sets, wherein a concentration degree of single class sample quantities of each of the N subsample sets is in a predetermined range. The respective candidate classes in the total training sample set St may be represented as C[xStart] to C[xEnd]. A concentration degree Cnt[n] of single class sample quantities of a n-th subsample set may be defined based on its single class sample quantity distribution interval [Qcs0[n].[jStart], Qcs0[n].[jEnd] (see Equation 2).

$$\mathrm{Cnt}[n]=(\mathrm{Qcs0}[n].[\mathrm{jstart}])/(\ \mathrm{Qcs0}[n].[\mathrm{jEnd}]) \qquad (2)$$

The predetermined range may be [0.5,1], [0.6,0.9], [0.7,1], etc. In an example, it is possible to group the total training sample set St into the N subsample sets by clustering. Specifically, the total training sample set St is grouped into the N subsample sets by performing clustering on the candidate classes of the total training sample set St based on single class sample quantities. In clustering, candidate classes with similar single class sample quantities are clustered into a sub-candidate class set, and then, samples of the sub-candidate class set in the total training sample set St are used to form a subsample set as one of the N subsample sets.

For example, if all the subsample sets before the y-th subsample set contain samples of 128 candidate classes, the coverage candidate class set of the downsampled pre-subsample set is composed of the 128 candidate classes.

In an example, the subsample set sequence is determined from a total candidate class sequence with a descending change in single class sample quantities. Specifically, determining the subsample set sequence Ss composed of N subsample sets of the total training sample set St comprises: dividing a total candidate class sequence Seq with a descending change in single class sample quantities determined based on single class sample quantities of respective candidate classes in the total training sample set St into N candidate class subsequences sq[1] to sq[n]; wherein the subsample set sequence Ss is a sequence composed of corresponding subsample sets, of the N candidate class subsequences, in the total training sample set St. That is, the total candidate class sequence Seq is determined based on the total training sample set St by a descending sorting operation Op_dSort.

In the method 200, wherein, N is a natural number greater than 1, for example, N is one of 2, 3, 4, 5, 6, 7, 8 and 9. The selection of N can be determined according to a single class sample quantity distribution situation. For example, when a distribution graph of the single class sample quantities with respect to the candidate classes shows that there are three aggregation sections for the single class sample quantities, N can be taken as 3. Optionally, the method 200 can include: determining the number N of the subsample sets according to a single class sample quantity distribution situation.

In the method 200, a stage training sample set SamsPh[n] of each stage (identified by "n", where n is any natural number in [1, N]) of the N stages includes a subsample set SamsFs[n] in the subsample set sequence Ss that corresponds to a sequence number of the stage. For example, for a second stage (n=2), a second-stage training sample set SamsPh[2] is SamsFs[2] or a union of SamsFs[2] and a downsampled pre-subsample set DwnSamsPre [2].

In an example, in the method 200, the downampling operation Op_dwnSam is performed in each stage of at least one stage from a second stage to a N-th stage in the N stages. That is, in at least one stage from a second stage to a N-th stage in the N stages, stage training not only uses a corresponding subsample set of the current stage but also uses a downsampled pre-subsample set of a pre-subsample set. Preferably, the downampling operation Op_dwnSam is performed in each stage from a second stage to a N-th stage in the N stages.

In an example, the subsample set SamsFs[n] can cover a plurality of candidate classes. The number of candidate classes covered by each subsample set in the N subsample sets is preferably different. Preferably, a subsequent subsample set in the subsample set sequence Ss covers more candidate classes than a previous subsample set. For example, SamsSF[3] covers more candidate classes than SamsSF[2].

In an example, an order of magnitude of a sample quantity of a subsequent subsample set in the subsample set sequence Ss is in proximity to or the same as that of a previous subsample set. For example, a sample quantity of SamsSF [3] is in proximity to or the same as a sample quantity of SamsSF [2] in terms of the order of magnitude.

In an example, a single class sample quantity distribution of the total candidate class sequence Seq with respect to the candidate classes is a long-tail distribution.

In an example, dividing the total candidate class sequence Seq with a descending change in single class sample quantities determined based on single class sample quantities of respective candidate classes in the total training sample set St into N candidate class subsequences comprises: selecting, with reference to a single class sample quantity distribution of the total candidate class sequence Seq with respect to the candidate classes, a position between adjacent candidate classes where sample quantities are decreased by 50% or more in the total candidate class sequence Seq to divide the total candidate class sequence Seq. For example, when a difference between single class sample quantities Qcs[x], Qcs[x+1] of adjacent candidate classes C[x], C[x+1] in the total candidate class sequence Seq is greater than or equal to Q[x+1], positions between the candidate classes C[x], C[x+1] can be divided into the sequence Seq, so as to divide the candidate classes C[x], C[x+1] into two different adjacent sub-sequences. Preferably, the total candidate class sequence Seq is divided at a position where a single class sample quantity distribution gradient of the total candidate class sequence Seq is locally minimum.

In an example, the downsampling operation Op_dwnSam in the method 200 is configured such that: in the stage training sample set SamsPh[y], an average single class sample quantity avgQcsD[x] of a downsampled subsample set DwnSamsSF[x] of each subsample set SamsSF[x] before the y-th subsample set SamsSF[y] in the subsample set sequence Ss is substantially equal to an average single class sample quantity avgQcs[y] of the y-th subsample set. For example, if DwnSamsSF[x] contains samples of 10 candidate classes and the total number of the samples is 200, the average single class sample quantity avgQcsD[x] is 20; similarly, if SamsSF[y] contains samples of 20 classes and the total number of the samples is 380, the average single class sample quantity avgQcsD[y] is 19, which is substantially equal to avgQcsD[x]. For example, the downsampling operation is configured such that: in the y-th stage training sample set, an average single class sample quantity of a downsampled subsample set of each subsample set before the y-th subsample set in the subsample set sequence Ss is substantially equal to an average single class sample quantity avgQcs[y] of the y-th subsample set; further, the downsampling operation can be configured such that: in the y-th stage training sample set, avgQcsD[x]=Int(avgQcs[y]), Int() rounding function. Still further, the downsampling operation can be configured such that: in the y-th stage training sample set, a single class sample quantity of each candidate class of a downsampled subsample set of each pre-subsample set SamsSF[x] is equal to Int(avgQcs[y]).

In the method 200, iteratively training the model M in sequence comprises a training operation Op_Trn, and specifically, comprises: in an n-th training stage, a model M[n] is obtained by training a model M[n-1] using the stage training sample set SamsPh[n], wherein the model M[n-1] is a trained model determined in a previous training stage, and when n=1 (i.e., in a first training stage), a model M[0] is set as an initial model before start of training, i.e., the initial model before start of training is set as a model M[0]. In a N-th training stage, a model M[N] is obtained by training a model M[N-1] using a stage training sample set SamsPh[N]. The model M[N] is a trained model M that is finally obtained. The trained model M can be used to process an object to be processed, such as sound information or image information. Each training stage comprises routine operations of artificial intelligence model training: feature extraction, classification, determination of a loss function, adjustment of model parameters, etc.

In the method 200, on the one hand, in terms of the whole training process, each sample in the total training sample set is used for training, thereby ensuring the full utilization of samples; on the other hand, in a y-th training stage, each single class sample quantity of the downsampled pre-subsample set in the stage training sample set is close to or falls into a single class sample quantity distribution interval of the y-th subsample set, thereby suppressing adverse influences of an uneven single class sample distribution on model performances, thereby being conductive to improving the model performance.

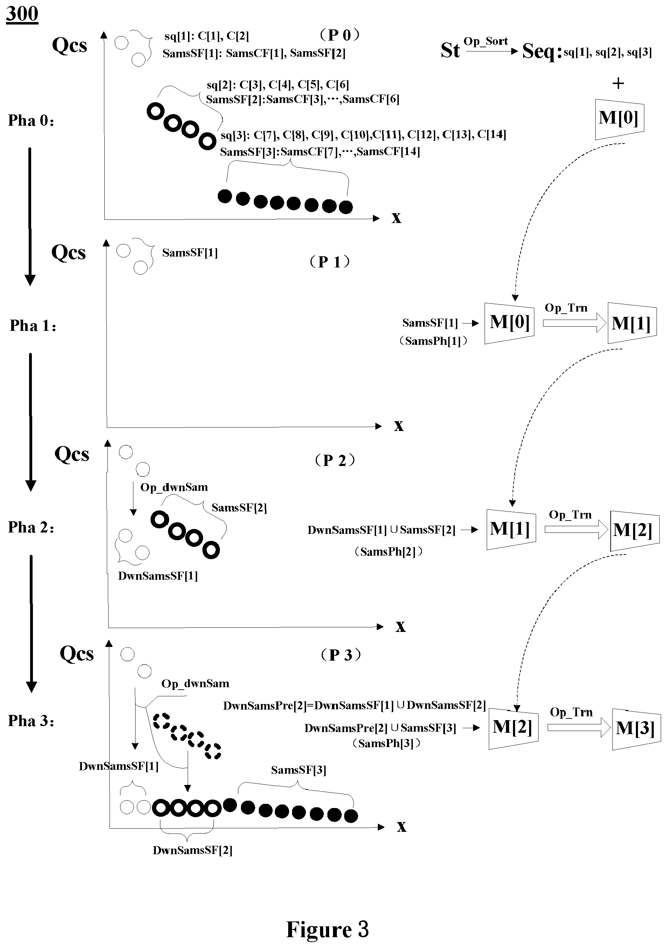

Next, the method of training a model of the present disclosure will be exemplarily described by taking N=3 as an example. Figure 3 illustrates an exemplary flow of a method 300 of training a model according to an embodiment of the present disclosure, wherein single class sample quantity distribution graphs P0, P1, P2, P3 of different stages are shown.

In an initialization stage, i.e., stage Pha 0, a total training sample set St is provided, an initial model M[0] is provided, and a subsample set sequence Ss: SamsSF[1], SamsSF[2], SamsSF[3] composed of three subsample sets of the total training sample set St is determined. Wherein, a total candidate class sequence Seq: C[1], C[2],..., C[13], C[14] with a descending change in single class sample quantities Qcs is obtained from the total training sample set St by adopting a sorting operation Op_ Sort. According to an aggregating situation of data points in a distribution graph of the single class sample quantities Qcs with respect to the candidate classes (see the distribution graph P0 in Figure 3), the total candidate class sequence Seq is divided into three candidate class subsequences, that is, the total candidate class sequence Seq can be represented as candidate class subsequences sq[1], sq[2], sq[3]. The abscissa x of the 14 data points in the distribution graph are natural numbers from 1 to 14, which correspond to the respective candidate classes in the total candidate class sequence Seq. Since the respective candidate class subsequences are obtained by dividing the total candidate class sequence Seq, the candidate classes in the respective candidate class subsequences are arranged in descending order of the single class sample quantities (see the distribution of the single class sample quantities Qcs with respect to the candidate classes in the distribution graph P0 in Figure 3). The distribution graph P0 of the single class sample quantities Qcs with respect to the candidate classes in Figure 3 has shown that corresponding subsample sets of the candidate class subsequences sq[1], sq[2], sq[3] are SamsSF[1], SamsSF[2], SamsSF[3]. There is no intersection between any two of the subsample sets SamsSF[1], SamsSF[2], SamsSF[3], and their union is the total training sample set St. As can be seen from the distribution graph P0 of the single class sample quantities Qcs with respect to the candidate classes in Figure 3: a sequence of average single class sample quantities of the subsample set sequence is a descending sequence, that is, SamsSF[1] has the largest average single class sample quantity, SamsSF[3] has the smallest average single class sample quantity, and the average single class sample quantity of SamsSF[2] is median. Near the respective groups of data points (thin-line circle data point group, thick-line circle data point group, solid-circle data point group) in the graph, single candidate class sample sets, composed of samples of single candidate classes, of the respective complete subsample sets SamsSF[1], SamsSF[2], SamsSF[3], are also shown, wherein, the single candidate class sample set of SamsSF[1] comprises SamsCF[1] and SamsCF[2], which respectively correspond to candidate classes C[1], C[2]; the single candidate class sample set of SamsSF[2] comprises SamsCF[3] to SamsCF[6], which respectively correspond to candidate classes C[3], ..., C[6]; and the single candidate class sample set of SamsSF[3] comprises SamsCF[7] to SamsCF[14], which respectively correspond to candidate classes C[7], ..., C[14].

In a first stage, i.e., Pha 1, a training operation Op_Trn of the first stage is performed based on a corresponding stage training sample set. Specifically, a model M[1] is obtained by training a model M[0] using a first-stage training sample set SamsPh[1]. In the first stage, no downsmapling operation is performed, and the first-stage training sample set SamsPh[1] is directly set as the first subsample set SamsSF[1] in the subsample set sequence Ss. The distribution graph P1 of the single class sample quantities Qcs of the first-stage training sample set SamsPh[1] with respect to the candidate classes has been shown in Figure 3, wherein, the meaning of the abscissa is the same as that in the 0-th stage; and since no downsampling is performed, single class sample quantity data points associated with the candidate classes C[1], C[2] do not move.

In a second stage, i.e., stage Pha2, a training operation Op_Trn of the second stage is performed based on a corresponding stage training sample set. Specifically, a model M[2] is obtained by training a model M[1] using a second-stage training sample set SamsPh[2]. In the second stage, a downsampling operation Op_DwnSam is performed on the first subsample set SamsSF[1] to obtain a downsampled subsample set DwnSamsSF[1] of the second stage, and the complete representation of the downsampled subsample set can be Pha[2].DwnSamsSF [1], that is, the downsampled subsample set is stage-related, and DwnSamsSF[x] is different in different stages (in this example, x=1). The second-stage training sample set SamsPh[2] is a union of the second subsample set SamsSF[2] and the downsampled subsample set DwnSamsSF[1]. The distribution graph P2 of the single class sample quantities Qcs of the second-stage training sample set SamsPh[2] with respect to the candidate classes has been shown in Figure 3, and the single class sample quantity distribution situation is as shown by solid-line contour data points, wherein, the meaning of the abscissa is the same as that in the 0-th stage; and since the downsampling operation Op_dwnSam has been performed on the first subsample set SamsSF[1] associated with the candidate classes C[1], C[2], with respect to the distribution graph P0, single class sample quantity data points associated with the candidate classes C[1], C[2] move downwards, such that each single class sample quantity falls into a single class sample quantity distribution interval (i.e., [Qcs[6],Qcs[3]], where Qcs[6] is the ordinate of the data points when x=6, and Qcs[3] is the ordinate of the data points when x=3) of the second subsample set SamsSF[2].

In a third stage, i.e., stage Pha3, a training operation Op_Trn of the third stage is performed based on a corresponding stage training sample set. Specifically, a model M[3] is obtained by training a model M[2] using a third-stage training sample set SamsPh[3], and iterative training is completed. In the third stage, a downsampling operation Op_DwnSam is performed on a union of the first and second subsample sets SamsSF[1] and SamsSF[2] to obtain downsampled subsample sets DwnSamsSF[1] (which, as stated previously, is different from the DwnSamsSF[1] of the second stage), DwnSamsSF[2] of the third stage. The third-phase training sample set SamsPh[3] is a union of the third subsample set SamsSF[3], the downsampled subsample set DwnSamsSF[2] and the downsampled subsample set DwnSamsSF[1]. The distribution graph P3 of the single class sample quantities Qcs of the third-phase training sample set SamsPh[3] with respect to the candidate classes has been shown in Figure 3, and the single class sample quantity distribution situation is as shown by solid-line contour data points, wherein, the meaning of the abscissa is the same as that in the 0-th stage; and since the downsampling operation Op_dwnSam has been performed on the first subsample set SamsSF[1] associated with the candidate classes C[1], C[2] and on the second subsample set SamsSF[2] associated with the candidate classes C[3], C[4], C[5], C[6], with respect to the distribution graph P0, single class sample quantity data points associated with the candidate classes C[1], C[2], C[3], C[4], C[5], C[6] move downwards, such that each single class sample quantity falls into a single class sample quantity distribution interval (i.e., [Qcs[14],Qcs[7]], where Qcs[14] is the ordinate of the data points when x=14, and Qcs[7] is the ordinate of the data points when x=7) of the third subsample set.

Referring to the distribution graphs P2 and P3 in Figure 3, it can be seen that downsampling makes the single class sample quantity distribution become even, which is conducive to improving the performance of the trained model.

The downsampling operation Op_DwnSam will be further described below.

Obtaining the downsampled target sample set DwnSobj by performing the downsampling operation Op_dwnSam on the target sample set Sobj with reference to the reference sample set Sref comprises: determining a downsampled sample set Dwnsc[j Start] to Dwnsc[jEnd] of each candidate class by downsampling a sample set sc[jStart] to sc[jEnd] of each candidate class in the target sample set Sobj such that a sample quantity of a downsampled sample set of each candidate class is close to or falls into the single class sample quantity distribution interval of the reference sample set Sref; and setting, as the downsampled target sample set DwnSobj, a union of the downsampled sample sets of respective candidate classes. The target sample set Sobj may be a sample set such as SamsPre[y] or SamsFS[n].

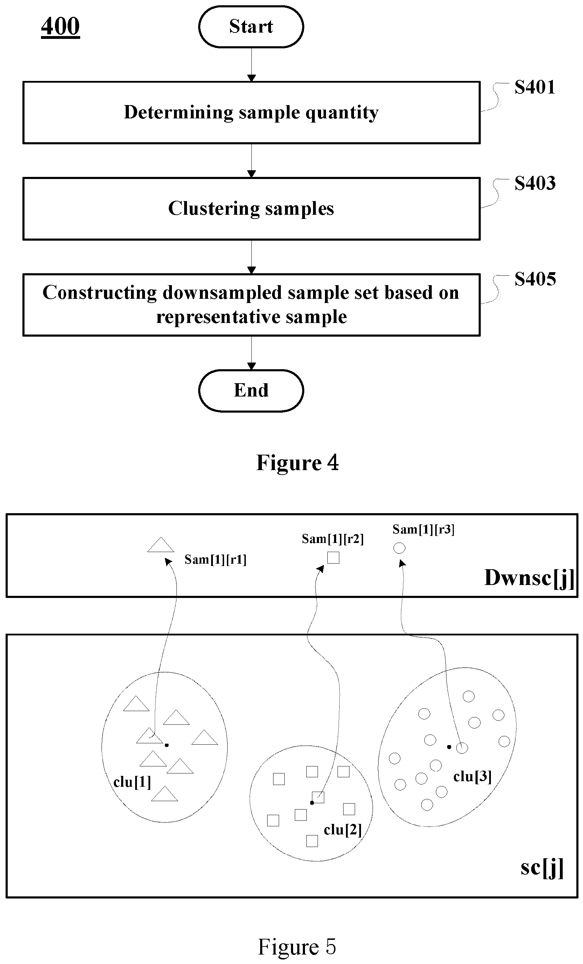

A method of determining a downsampled sample set of a single candidate class by downsampling will be described by taking performing downsampling on a sample set sc[j] of a candidate class C[j] in the target sample set Sobj to determine the downsampled sample set Dwnsc[j] of the candidate class as an example below. Figure 4 illustrates a flowchart of a method 400 for downsampling according to an embodiment of the present disclosure, wherein, the method 400 is used for determining a downsampled sample set of a single candidate class by downsampling.

In operation S401, a sample quantity k (i.e., single class sample quantity), of the candidate class C[j], with respect to the downsampled sample set Dwnsc[j] of the candidate class is determined based on the single class sample quantity distribution interval of the reference sample set Sref. For example, the single class sample quantity distribution interval of the reference sample set Sref is [min, max], and k can be taken as an interval median of the interval, or a random value in a middle section of the interval. Considering that the single class sample quantities of the reference sample set Sref are values that change in the interval [min, max], k can be a weighted average of the single class sample quantities related to the single class sample quantities. Figure 5 illustrates a schematic view of a method for downsampling according to an embodiment of the present disclosure, which corresponds to the case where k=3 in the method 400.

In operation S403, the samples in the sample set sc[j] are clustered into k sample clusters clu[1] to clu[k] based on classification features F[jStart] to F[jEnd] of samples in the sample set sc[j] of the candidate class C[j] in the target sample set Sobj determined by the model M. The classification features can be the output of the penultimate full connection layer of the model M. A downsampling scenario is used in stage training, and when a current stage is y, the model used for outputting the classification features can be a model M[y-1] determined in a previous stage. Referring to Figure 5, in a case where it is determined that k=3, sample clusters clu[1], clu[2] and clu[3] are obtained by clustering. A clustering method can be, for example, C-means clustering algorithm.

In operation S405, the downsampled sample set Dwnsc[j]: {Sam[1][r1], ... ,Sam[k][rk]} of the candidate class is constructed based on a representative sample Sam[i][ik] selected from each of the k sample clusters, where i is a natural number from 1 to k. The representative sample can be determined based on classification features. In an example, a sample corresponding to a classification feature closest to a center of each classification feature cluster in a classification feature space is selected as a representative sample of a corresponding sample cluster among the k sample clusters. For example, a representative classification feature Fr[ir] is selected from each classification feature cluster among k classification feature clusters cluF[1] to cluF[k] corresponding to the k sample clusters clu[1] to clu[k], and the representative classification feature Fr[ir] is preferably a classification feature closest to a center of a classification feature cluster cluF[i] in a classification feature space. The representative classification feature Fr[ir] corresponds to the representative sample Sam[i][ir] in the sample cluster clu[i], and specifically, the classification feature outputted by the model for the sample Sam[i][ir] is Fr[ir]. As such, the downsampling sample set Dwnsc[j] can be composed of corresponding samples of k representative classification features. The downsampling sample set Dwnsc[j] composed of three representative samples in the case where k=3 has been shown in Figure 5.

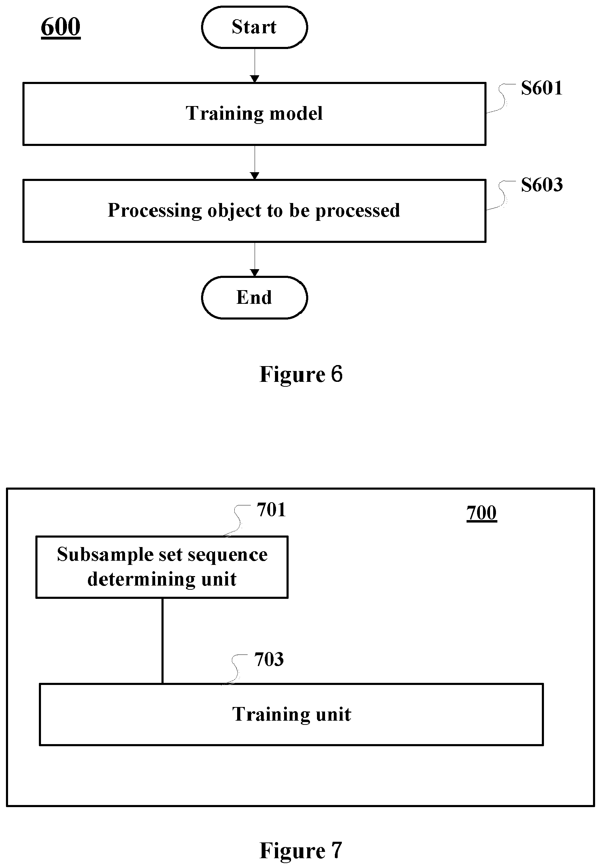

An aspect of the present disclosure relates to a computer-implemented information processing method. Exemplary description is made below with reference to Figure 6. Figure 6 illustrates an exemplary flowchart of an information processing method 600 according to an embodiment of the present disclosure. In operation S601, a model M is trained using the method for training a model of the present disclosure. In operation S603, an object to be processed is processed using the trained model M. Optionally, in a case where the training has been completed, the method 600 may include only operation S603. The object to be processed may be image information (e.g., collected image data) or sound information (e.g., collected sound data).

The present disclosure further provides a device for training a model. Exemplary description is made below with reference to Figure 7. Figure 7 illustrates an exemplary block diagram of a device 700 for training a model according to an embodiment of the present disclosure. The model M is configured to have a plurality of candidate classes. The device 700 comprises: a subsample set sequence determining unit 701 and a training unit 703. The subsample set sequence determining unit 701 is configured to determine a subsample set sequence Ss composed of N subsample sets of a total training sample set St. The training unit 703 is configured to: iteratively train the model in sequence in N stages based on the subsample set sequence Ss. There is no intersection between coverage candidate class sets of any two of the N subsample sets. A sequence of average single class sample quantities of the subsample set sequence is a descending sequence. A stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set. A coverage candidate class set of the downsampled pre-subsample set is the same as that of the pre-subsample set. Each single class sample quantity of the downsampled pre-subsample set is close to or falls into a single class sample quantity distribution interval of the y-th subsample set. The device 700 has a corresponding relationship with the method 200. For the further configuration situation of the device 700, reference may be made to the description of the method 200 of the present disclosure.

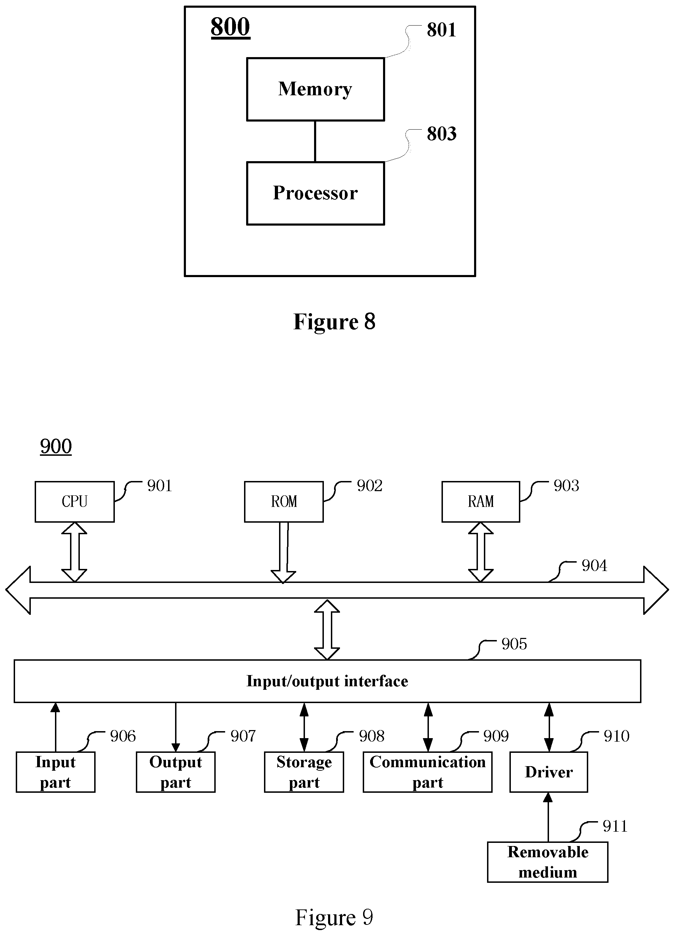

The present disclosure further provides a device for training a model. Exemplary description is made below with reference to Figure 8. Figure 8 illustrates an exemplary block diagram of a device 800 for training a model according to an embodiment of the present disclosure. The device 800 comprises: a memory 801 having instructions stored thereon; and at least one processor 803 connected with the memory 801 and used to execute the instructions on the memory 801 to implement: determining a subsample set sequence composed of N subsample sets of a total training sample set; and iteratively training the model in sequence in N stages based on the subsample set sequence; wherein there is no intersection between coverage candidate class sets of any two of the N subsample sets; a sequence of average single class sample quantities of the subsample set sequence is a descending sequence; a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set; a coverage candidate class set of the downsampled pre-subsample set is the same as that of the pre-subsample set; and each single class sample quantity of the downsampled pre-subsample set is close to or falls into a single class sample quantity distribution interval of the y-th subsample set. The instruction has a corresponding relationship with the method 200. For the further configuration situation of the device 800, reference may be made to the description of the method 200 of the present disclosure

An aspect of the present disclosure provides a non-transitory computer-readable storage medium storing thereon a program that, when executed, causes a computer to: determine a subsample set sequence composed of N subsample sets of a total training sample set; and iteratively train the model in sequence in N stages based on the subsample set sequence; wherein there is no intersection between coverage candidate class sets of any two of the N subsample sets; a sequence of average single class sample quantities of the subsample set sequence is a descending sequence; a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set; a coverage candidate class set of the downsampled pre-subsample set is the same as that of the pre-subsample set; and each single class sample quantity of the downsampled pre-subsample set is close to or falls into a single class sample quantity distribution interval of the y-th subsample set. The program has a corresponding relationship with the method 200. For the further configuration situation of the program, reference may be made to the description of the method 200 of the present disclosure.

An aspect of the present disclosure provides a non-transitory computer-readable storage medium storing thereon a program that, when executed, causes a computer to: process an object to be processed using a trained model, wherein the trained model is the model trained using the method 200 of training a model of the present disclosure.

According to an aspect of the present disclosure, there is further provided an information processing apparatus.

Figure 9 illustrates an exemplary block diagram of an information processing apparatus 900 according to an embodiment of the present disclosure. In Figure 9, a Central Processing Unit (CPU) 901 executes various processing according to programs stored in a Read-Only Memory (ROM) 902 or programs loaded from a storage part 909 to a Random Access Memory (RAM) 903. In the RAM 903, data needed when the CPU 901 executes various processing and the like is also stored as needed.

The CPU 901, the ROM 902 and the RAM 903 are connected to each other via a bus 904. An input/output interface 905 is also connected to the bus 904.

The following components are connected to the input/output interface 905: an input part 906, including a soft keyboard and the like; an output part 907, including a display such as a Liquid Crystal Display (LCD) and the like, as well as a speaker and the like; the storage part 908 such as a hard disc and the like; and a communication part 909, including a network interface card such as an LAN card, a modem and the like. The communication part 909 executes communication processing via a network such as the Internet, a local area network, a mobile network or a combination thereof.

A driver 910 is also connected to the input/output interface 905 as needed. A removable medium 911 such as a semiconductor memory and the like is installed on the driver 910 as needed, such that programs read therefrom are installed in the storage part 909 as needed.

The CPU 901 can run a program corresponding to a method of training a model or an information processing method.

The method of training a model of the present disclosure is based on multi-stage model training including a downsampling operation, such that the number of samples of each candidate class tends to be the same or is the same in each processing stage, so as to make a sample distribution uniform. The information processing method of the present disclosure is based on a model trained by the method of training a model of the present disclosure. The beneficial effects of the methods, devices, and storage media of the present disclosure include at least: improving the accuracy performance of a model, in particular the processing accuracy for an object that appears at a low frequency.

As described above, according to the present disclosure, there are provided principles of training a model and processing information. It should be noted that, the effects of the solution of the present disclosure are not necessarily limited to the above-mentioned effects, and in addition to or instead of the effects described in the preceding paragraphs, any of the effects as shown in the specification or other effects that can be understood from the specification can be obtained.

Although the present invention has been disclosed above through the description with regard to specific embodiments of the present invention, it should be understood that those skilled in the art can design various modifications (including, where feasible, combinations or substitutions of features between various embodiments), improvements, or equivalents to the present invention within the spirit and scope of the appended claims. These modifications, improvements or equivalents should also be considered to be included within the protection scope of the present invention.

It should be emphasized that, the term "comprise/include" as used herein refers to the presence of features, elements, operations or assemblies, but does not exclude the presence or addition of one or more other features, elements, operations or assemblies.

In addition, the methods of the various embodiments of the present invention are not limited to be executed in the time order as described in the specification or as shown in the accompanying drawings, and may also be executed in other time orders, in parallel or independently. Therefore, the execution order of the methods as described in the specification fails to constitute a limitation to the technical scope of the present invention.

Appendix

The present disclosure includes but is not limited to the following solutions.

1. A computer-implemented method of training a model with a classification function, the model configured to have a plurality of candidate classes, characterized in that the method comprises:

determining a subsample set sequence composed of N subsample sets of a total training sample set; and iteratively training the model in sequence in N stages based on the subsample set sequence;
wherein there is no intersection between coverage candidate class sets of any two of the N subsample sets;
a sequence of average single class sample quantities of the subsample set sequence is a descending sequence;
a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set;
a coverage candidate class set of the downsampled pre-subsample set is the same as that of the pre-subsample set; and
each single class sample quantity of the downsampled pre-subsample set is close to or falls into a single class sample quantity distribution interval of the y-th subsample set.

2. The method according to Appendix 1, wherein determining the subsample set sequence composed of N subsample sets of the total training sample set comprises:

grouping the total training sample set into the N subsample sets based on single class sample quantities of respective candidate classes in the total training sample set; and
determining, as the subsample set sequence, a sequence in descending order of average single class sample quantities of the N subsample sets;
wherein a concentration degree of a single class sample quantity of each of the N subsample sets is in a predetermined range.

3. The method according to Appendix 2, wherein grouping the total training sample set into the N subsample sets based on single class sample quantities of respective candidate classes in the total training sample set comprises:
grouping the total training sample set into the N subsample sets by performing clustering on the candidate classes of the total training sample set based on single class sample quantities.

4. The method according to Appendix 1, wherein determining the subsample set sequence composed of N subsample sets of the total training sample set comprises:

dividing a total candidate class sequence with a descending change in single class sample quantities determined based on single class sample quantities of respective candidate classes in the total training sample set into N candidate class subsequences;

wherein the subsample set sequence is a sequence composed of corresponding subsample sets, of the N candidate class subsequences, in the total training sample set.

5. The method according to Appendix 1, wherein where N is one of 2, 3, 4, 5, 6, 7, 8 and 9.

6. The method according to Appendix 1, wherein a stage training sample set of each stage of the N stages includes a corresponding subsample set in the subsample set sequence.

7. The method according to Appendix 1, wherein the downsampled pre-subsample set is determined by performing a downsampling operation on the pre-subsample set with reference to the y-th subsample set; and
the downsampling operation is configured such that: when a downsampled target sample set is obtained by performing the downsampling operation on a target sample set with reference to a reference sample set, a coverage candidate class set of the downsampled target sample set is the same as that of the target sample set, each single class sample quantity of the downsampled target sample set is close to or falls into a single class sample quantity distribution interval of the reference sample set.

8. The method according to Appendix 7, wherein the downampling operation is performed in each of stages from the second stage to the N-th stage in the N stages.

9. The method according to Appendix 4, wherein a single class sample quantity distribution of the total candidate class sequence with respect to the plurality of candidate classes is a long-tail distribution.

10. The method according to Appendix 4, wherein dividing the total candidate class sequence with a descending change in single class sample quantities determined based on single class sample quantities of respective candidate classes in the total training sample set into N candidate class subsequences comprises:
selecting, with reference to a single class sample quantity distribution of the total candidate class sequence with respect to the candidate classes, a position between adjacent candidate classes where sample quantities are decreased by 50% or more in the total candidate class sequence to divide the total candidate class sequence.

11. The method according to Appendix 4, wherein the total candidate class sequence is divided at a position where a single class sample quantity distribution gradient of the total candidate class sequence is locally minimum.

12. The method according to Appendix 7, wherein the downsampling operation is configured such that: in the stage training sample set, an average single class sample quantity of a downsampled subsample set of each subsample set before the y-th subsample set in the subsample set sequence is substantially equal to an average single class sample quantity of the y-th subsample set.

13. The method according to Appendix 1, wherein the number of candidate classes covered by each subsample set in the N subsample sets is different.

14. The method according to Appendix 1, wherein a subsequent subsample set in the subsample set sequence covers more candidate classes than a previous subsample set.

15. The method according to Appendix 1, wherein an order of magnitude of a sample quantity of a subsequent subsample set in the subsample set sequence is in proximity to or the same as that of a previous subsample set.

16. The device according to Appendix 7, wherein obtaining the downsampled target sample set by performing the downsampling operation on the target sample set with reference to the reference sample set comprises:

determining a downsampled sample set of each candidate class by downsampling a sample set of each candidate class in the target sample set such that a sample quantity of a downsampled sample set of each candidate class is close to or falls into the single class sample quantity distribution interval of the reference sample set; and

setting, as the downsampled target sample set, a union of the downsampled sample sets of respective candidate classes.

17. The device according to Appendix 16, wherein determining the downsampled sample set of each candidate class by downsampling the sample set of each candidate class in the target sample set comprises:

determining a sample quantity k, of the candidate class, with respect to the downsampled sample set of the candidate class, based on the single class sample quantity distribution interval of the reference sample set;

clustering, based on classification features of samples in the sample set of the candidate class in the target sample set determined by the model, the samples in the sample set of the candidate class into k sample clusters; and

constructing the downsampled sample set of the candidate class based on a representative sample selected from each of the k sample clusters.

18. The device according to Appendix 17, wherein a sample corresponding to a classification feature closest to a center of each classification feature cluster in a classification feature space is selected as a representative sample of a corresponding sample cluster among the k sample clusters.

19. A computer-implemented information processing method, characterized by comprising:
processing an object to be processed using the model trained by the method according to any one of Appendixes 1 to 18.

20. A device for training a model configured to have a plurality of candidate classes, characterized by comprising:

a memory having instructions stored thereon; and

at least one processor connected with the memory and configured to execute the instructions to:

determine a subsample set sequence composed of N subsample sets of a total training sample set; and

iteratively train the model in sequence in N stages based on the subsample set sequence;

wherein there is no intersection between coverage candidate class sets of any two of the N subsample sets;

a sequence of average single class sample quantities of the subsample set sequence is a descending sequence;

a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set;

a coverage candidate class set of the downsampled pre-subsample set is the same as that of the pre-subsample set; and

each single class sample quantity of the downsampled pre-subsample set is close to or falls into a single class sample quantity distribution interval of the y-th subsample set.

**Claims**

1. A computer-implemented method (200) of training a model with a classification function, the model configured to have a plurality of candidate classes, **characterized in that** the method comprising:

    determining (S201) a subsample set sequence composed of N subsample sets of a total training sample set; and
    iteratively training (S203) the model in sequence in N stages based on the subsample set sequence;
    wherein there is no intersection between coverage candidate class sets of any two of the N subsample sets;
    a sequence of average single class sample quantities of the subsample set sequence is a descending sequence;
    a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set;
    a coverage candidate class set of the downsampled pre-subsample set is the same as that of the pre-subsample set; and
    each single class sample quantity of the downsampled pre-subsample set is close to or falls into a single class sample quantity distribution interval of the y-th subsample set.

2. The method according to claim 1, wherein determining the subsample set sequence composed of N subsample sets of the total training sample set comprises:

> grouping the total training sample set into the N subsample sets based on single class sample quantities of respective candidate classes in the total training sample set; and
> determining, as the subsample set sequence, a sequence in descending order of average single class sample quantities of the N subsample sets;
> wherein a concentration degree of a single class sample quantity of each of the N subsample sets is in a predetermined range.

3. The method according to claim 2, wherein grouping the total training sample set into the N subsample sets based on single class sample quantities of respective candidate classes in the total training sample set comprises: grouping the total training sample set into the N subsample sets by performing clustering on the candidate classes of the total training sample set based on single class sample quantities.

4. The method according to claim 1, wherein determining the subsample set sequence composed of N subsample sets of the total training sample set comprises:

> dividing a total candidate class sequence with a descending change in single class sample quantities determined based on single class sample quantities of respective candidate classes in the total training sample set into N candidate class subsequences;
> wherein the subsample set sequence is a sequence composed of corresponding subsample sets, of the N candidate class subsequences, in the total training sample set.

5. The method according to claim 1, wherein the downsampled pre-subsample set is determined by performing a downsampling operation on the pre-subsample set with reference to the y-th subsample set; and
the downsampling operation is configured such that: when a downsampled target sample set is obtained by performing the downsampling operation on a target sample set with reference to a reference sample set, a coverage candidate class set of the downsampled target sample set is the same as that of the target sample set, each single class sample quantity of the downsampled target sample set is close to or falls into a single class sample quantity distribution interval of the reference sample set.

6. The method according to claim 5, wherein the downampling operation is performed in each of stages from the second stage to the N-th stage in the N stages.

7. The method according to claim 4, wherein a single class sample quantity distribution of the total candidate class sequence with respect to the plurality of candidate classes is a long-tail distribution.

8. The method according to claim 4, wherein dividing the total candidate class sequence with a descending change in single class sample quantities determined based on single class sample quantities of respective candidate classes in the total training sample set into N candidate class subsequences comprises:
selecting, with reference to a single class sample quantity distribution of the total candidate class sequence with respect to the candidate classes, a position between adjacent candidate classes where sample quantities are decreased by 50% or more in the total candidate class sequence to divide the total candidate class sequence.

9. The method according to claim 4, wherein the total candidate class sequence is divided at a position where a single class sample quantity distribution gradient of the total candidate class sequence is locally minimum.

10. The method according to claim 5, wherein the downsampling operation is configured such that: in the stage training sample set, an average single class sample quantity of a downsampled subsample set of each subsample set before the y-th subsample set in the subsample set sequence is substantially equal to an average single class sample quantity of the y-th subsample set.

11. The device according to claim 5, wherein obtaining the downsampled target sample set by performing the downsampling operation on the target sample set with reference to the reference sample set comprises:

> determining a downsampled sample set of each candidate class by downsampling a sample set of each candidate class in the target sample set such that a sample quantity of a downsampled sample set of each candidate class is close to or falls into the single class sample quantity distribution interval of the reference sample set; and

setting, as the downsampled target sample set, a union of the downsampled sample sets of respective candidate classes.

12. The device according to claim 11, wherein determining the downsampled sample set of each candidate class by downsampling the sample set of each candidate class in the target sample set comprises:

determining (S401) a sample quantity k, of the candidate class, with respect to the downsampled sample set of the candidate class, based on the single class sample quantity distribution interval of the reference sample set;
clustering (S403), based on classification features of samples in the sample set of the candidate class in the target sample set determined by the model, the samples in the sample set of the candidate class into k sample clusters; and
constructing (S405) the downsampled sample set of the candidate class based on a representative sample selected from each of the k sample clusters.

13. The device according to claim 12, wherein a sample corresponding to a classification feature closest to a center of each classification feature cluster in a classification feature space is selected as a representative sample of a corresponding sample cluster among the k sample clusters.

14. A computer-implemented information processing method (600), **characterized by** comprising:
processing (S603) an object to be processed using the model trained by the method according to one of claims 1 to 14.

15. A device (800) for training a model configured to have a plurality of candidate classes, **characterized by** comprising:

a memory (801) having instructions stored thereon; and
at least one processor (803) connected with the memory and configured to execute the instructions to:

determine a subsample set sequence composed of N subsample sets of a total training sample set; and
iteratively train the model in sequence in N stages based on the subsample set sequence;

wherein there is no intersection between coverage candidate class sets of any two of the N subsample sets;
a sequence of average single class sample quantities of the subsample set sequence is a descending sequence;
a stage training sample set of a y-th stage from a second stage to a N-th stage in the N stages comprises a y-th subsample set in the subsample set sequence and a downsampled pre-subsample set of a pre-subsample set composed of all subsample sets before the y-th subsample set;
a coverage candidate class set of the downsampled pre-subsample set is the same as that of the pre-subsample set; and
each single class sample quantity of the downsampled pre-subsample set is close to or falls into a single class sample quantity distribution interval of the y-th subsample set.

Figure 1

**200**

Figure 2

Figure 3

**400**

Start

Determining sample quantity — S401

Clustering samples — S403

Constructing downsampled sample set based on representative sample — S405

End

Figure 4

Sam[1][r2]

Sam[1][r3]

Sam[1][r1]

Dwnsc[j]

clu[1]

clu[2]

clu[3]

sc[j]

Figure 5

**600**

Start

Training model — S601

Processing object to be processed — S603

End

Figure 6

**700**

Subsample set sequence determining unit — 701

Training unit — 703

Figure 7

**800**  801

Memory

803

Processor

Figure 8

**900**

901  CPU

902  ROM

903  RAM

904

905

Input/output interface

906  Input part

907  Output part

908  Storage part

909  Communication part

910  Driver

911  Removable medium

Figure 9

Europäisches Patentamt
European Patent Office
Office européen des brevets

## EUROPEAN SEARCH REPORT

Application Number

EP 23 15 4148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN XIAOSHUANG ET AL: "A novel under-sampling algorithm based on Iterative-Partitioning Filters for imbalanced classification", 2016 IEEE INTERNATIONAL CONFERENCE ON AUTOMATION SCIENCE AND ENGINEERING (CASE), IEEE, 21 August 2016 (2016-08-21), pages 490-494, XP033005418, DOI: 10.1109/COASE.2016.7743445 [retrieved on 2016-11-14] * Paragraph 1, 3 on page 490; page 491; paragraph 1 on page 492; paragraph 5 on page 493; figure 1 * | 1-15 | INV. G06N20/00 |
| A | YAN-PING ZHANG ET AL: "Cluster-based majority under-sampling approaches for class imbalance learning", INFORMATION AND FINANCIAL ENGINEERING (ICIFE), 2010 2ND IEEE INTERNATIONAL CONFERENCE ON, IEEE, PISCATAWAY, NJ, USA, 17 September 2010 (2010-09-17), pages 400-404, XP031780510, ISBN: 978-1-4244-6927-7 * page 401 - page 402 * | 3,12,13 | TECHNICAL FIELDS SEARCHED (IPC) G06N |

The present search report has been drawn up for all claims

| Place of search | Date of completion of the search | Examiner |
|---|---|---|
| The Hague | 7 July 2023 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 239 537 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210209067